# EUROPÄISCHE PATENTANMELDUNG

(11) **EP 4 613 816 A1**
(43) Veröffentlichungstag der Anmeldung: **10.09.2025**
(21) Anmeldenummer: 25160860.0
(22) Anmeldetag: 28.02.2025
(51) Int. Cl.: C09C 3/10

(54) **PARTIKEL MIT EINER POLYMER-BESCHICHTUNG SOWIE VERFAHREN ZUR HERSTELLUNG DIESER BESCHICHTETEN PARTIKEL UND DEREN ANWENDUNG**

(30) Priorität: 05.03.2024 DE 102024106341; 20.02.2025 DE 102025106538
(71) Anmelder: Gebrüder Dorfner GmbH & Co. KG, 92242 Hirschau (DE)
(72) Erfinder: Frohmann, Andreas, 92253 Schnaittenbach (DE); Colelli, Vanessa, 92224 Amberg (DE); Dobmeier, Maximilian, 92256 Hahnbach (DE); Maahsen, Tobias, 92224 Amberg (DE); Süß, Marco, 92431 Neunburg vorm Wald (DE)
(74) Vertreter: Hannke, Christian

(57) **Zusammenfassung**

Die vorliegende Erfindung betrifft Partikel mit einer zumindest abschnittsweise hydrophoben Oberflächenbeschichtung, umfassend Trägerpartikel, die zumindest abschnittsweise mit einer Beschichtungszusammensetzung auf Basis von Monomeren des Typs A oberflächenbeschichtet sind, wobei die Monomeren des Typs A eine Substanz der Struktur, 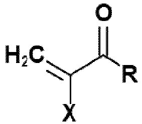 umfassen, wobei R ausgewählt ist aus einer Gruppe, die OR¹, NR¹, NR¹R² und CN umfasst, wobei X gleich H oder eine Kohlenwasserstoffkette ist, wobei R1 und R2 im Anspruch 3 definiert sind. Weiterhin betrifft die Erfindung ein Verfahren zur Herstellung solcher Partikel sowie ein Formteil, das solche Partikel umfasst.

## Beschreibung

Die vorliegende Erfindung betrifft Partikel mit einer zumindest abschnittsweise hydrophoben Oberflächenbeschichtung, umfassend Trägerpartikel, die zumindest abschnittsweise mit einer Beschichtungszusammensetzung auf Basis von Monomeren des Typs A oberflächenbeschichtet sind, wobei die Monomeren des Typs A eine Substanz der Struktur, 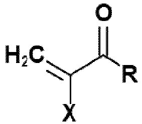 umfassen, wobei R ausgewählt ist aus einer Gruppe, die OR¹, NR¹, NR¹R² und CN umfasst. Weiterhin betrifft die Erfindung ein Verfahren zur Herstellung solcher Partikel sowie ein Formteil, das solche Partikel umfasst.

Aus dem Stand der Technik sind eine Vielzahl von Partikeln bekannt, die beispielsweise in Verbundwerkstoffen als Füllstoffe verwendet werden können. Derartige Füllstoffe umfassen üblicherweise einen partikulären anorganischen Trägerpartikel. Oftmals werden Mineralien wie beispielsweise Quarzsand verwendet.

Zur Ausbildung von Verbundwerkstoffen werden diese Partikel beispielsweise in eine Matrix eines organischen Bindemittels (z.B. Polyester oder Acryl) eingebettet. Nach Aushärten des Bindemittels wird der Verbundwerkstoff gebildet. Derartige Verbundmaterialien können beispielsweise bei Küchenspülen, Sanitärprodukten wie Waschbecken, Duschtassen, Badewannen, Toiletten und Bidets eingesetzt werden. Außerdem finden Sie Verwendung im Möbelbau und im Bauwesen, beispielsweise als Arbeitsplatte, Fußboden oder Wandverkleidung.

Neben diesen Verbundwerkstoffen mit mineralischen Füllstoffen sind außerdem Verbundwerkstoffe bekannt, bei denen synthetische Füllstoffe (z.B. ATH) in organische Bindemittel eingebettet werden (z.B. bekannt als "Solid Surface Material"). Daneben ist auch bekannt, dass Mischungen aus unterschiedlichen Mineralien als Füllstoff in einem Verbundwerkstoff eingesetzt werden können (z.B. Deutsche Patentanmeldung Nr. 10 2012 113 000.0: "Verbundwerkstoff und Verfahren zu dessen Herstellung" derselben Anmelderin Gebrüder Dorfner GmbH & Co. Kaolin- und Kristallquarzsand-Werke KG).

Füllstoffhaltige Polymere werden seit vielen Jahrzehnten im industriellen Maßstab hergestellt und verwendet. Für wie oben beschriebene Verbundwerkstoffe werden, beispielsweise als Polymere Thermoplaste, Duroplaste oder Elastomere oder Mischungen dieser drei Gruppen in verschiedenen Verhältnissen verwendet. Aus dem Stand der Technik sind z.B. acrylbasierte füllstoffhaltige (z.B. Quarz, ATH, etc.) flächige Formteile bekannt, welche mittels einem Thermoformverfahren zu einem Formteil gefertigt werden, welche z.B. als Küchenspüle, vor allem aber als Waschbecken, Duschtasse oder Badewanne Verwendung findet. Es sind neben Quarz und ATH auch die Verwendung einiger anderer Füllstoffe und Additive möglich.

Aus dem Stand der Technik ist schließlich auch das sogenannte Mineralgussverfahren, auch als Solid-Surface-Verfahren bekannt. Hier werden füllstoffhaltige Polymere mittels Druckförderung in Formteil injiziert und härten dort teils katalytisch, teils thermisch induziert aus. Als Füllstoffe werden vorwiegend CaCO₃ und ATH eingesetzt, sowie Additive und ggf. farbgebende Bestandteile. Auch Quarzsand oder -mehl kann enthalten sein.

Die meisten der bekannten Verfahren haben gemeinsam, dass die partikulären Bestandteile mit a) einem Harz (Sirup) aus PMMA und MMA versetzt und unter Druck und erhöhter Temperatur in Formteilen ausgehärtet werden oder b) mit Polyester in Gießmaschinen zu Formteilen gegossen und mithilfe von Härteradditiven ausgehärtet werden. Das bei b) verwendete Polyester kann optional auch einen gewissen Teil an MMA (Methacrylsäuremethylester, Methylmethacrylat) enthalten.

Sowohl bei den eingesetzten Polymeren als auch den Füllstoffen besteht derzeit ein Bestreben, diese zunehmend aus nachwachsenden Rohstoffen zu gewinnen.

So werden neuerdings vermehrt organische Füllstoffe auf Basis von nachwachsenden Rohstoffen eingesetzt. Dabei handelt es sich beispielsweise um Nussschalen oder Olivenkerne, Fasern, Hülsen, Samen oder sonstige Pflanzenbestandteile, welche beispielsweise als Mehl oder als auf eine bestimmte Körnung gemahlene Partikel eingesetzt werden.

Ein Nachteil vieler Verbundsystem ist, dass zwischen den Partikeln und dem Bindemittel keine ausreichend feste Bindung aufgebaut werden kann, welche die Partikel an dem Bindemittel fixiert. Meist ist daher in einem Verbundwerkstoff ein Partikel nur durch das diese Partikel umgebende ausgehärtete Bindemittelmatrix (anorganisch oder organisch) räumlich fixiert, eine tatsächliche (beispielsweise chemische) Bindung besteht zwischen Partikel und Bindemittelmatrix nicht. Dies kann damit begründet werden, dass viele Füllstoffpartikel eine hydrophile Oberfläche aufweisen, wohingegen viele der als Bindemittel genutzten Polymere hydrophob sind. Sie sind daher mit der hydrophilen Partikeloberfläche nicht verbunden und wirken bei Druck- oder Zugbeanspruchung wie Sollbruchstellen, was sehr nachteilig ist.

Um eine bessere Benetzung durch das Bindemittel als auch eine Bindung der Partikel in dem Bindemittel zu erreichen, wurde erfolgreich versucht, die Oberfläche der Partikel zu hydrophobieren. Dies konnte beispielsweise mittels einer Silanisierung, gelegentlich auch einer Silikonisierung erreicht werden. Abhängig von der Art des verwendetes Silans und dessen funktioneller Gruppe wird eine bessere physikalische oder auch chemische Bindung an das umgebende Bindemittel erreicht. Es können auch Mischformen beider Effekte auftreten.

In den letzten Jahren haben sich die Anforderungen sowohl an Verbundwerkstoffe als auch an deren Ausgangsmaterialien sehr stark geändert. Neben der Funktionalität und der Qualität eines oder mehrerer beschichteten/r Partikel/s spielen Attribute wie preisreduziertes Produkt sowie ein energieeffizientes und nachhaltiges Herstellungsverfahren und daraus resultierendes Formteil eine sehr wichtige Rolle v.a. für jene Formteilhersteller, die ein "Grünes" Produkt anbieten wollen. Diese Anforderungen betreffen meist die gesamte Lieferkette und damit sowohl den mineralischen Füllstoff als auch den damit produzierten Verbundwerkstoff.

Eine wie oben beschriebene Oberflächenbeschichtung, insbesondere eine anorganische Beschichtung, zzgl. Silanisierung oder Silikonisierung ist weder preisgünstig noch energieeffizient oder nachhaltig. Durch das Einbringen einer solchen weiteren Komponenten wird außerdem das ohnehin schon problematische Recycling von Verbundwerkstoffen weiter erschwert.

Es besteht daher ein Bedarf an einer alternativen preisgünstigen Oberflächenbeschichtung für partikuläre Füllstoffe sowie an einem Verfahren zum energieeffizienten Aufbringen einer solchen Oberflächenbeschichtung auf Partikel.

Diese Aufgabe wird einerseits durch Partikel mit einer zumindest abschnittsweise hydrophoben Oberflächenbeschichtung gelöst, wobei die Partikel Trägerpartikel umfassen, die zumindest abschnittsweise mit einer Beschichtungszusammensetzung auf Basis von Monomeren des Typs A (im Folgenden auch als "A-Monomere" bezeichnet) oberflächenbeschichtet sind,
wobei die Monomeren des Typs A eine Substanz der Struktur 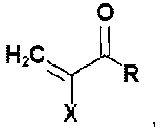
umfassen, wobei R ausgewählt ist aus einer Gruppe, die OR1, NR1, NR1R2 und CN umfasst.

X ist vorzugsweise H oder eine Kohlenwasserstoffkette, bevorzugt eine unverzweigte Kohlenwasserstoffkette und insbesondere bevorzugt CH₃.

Unabhängig von X, bevorzugt aber ergänzend zu den oben beschriebenen bevorzugten Varianten von X ist R₁ und/oder R₂ bevorzugt ausgewählt ist aus einer Gruppe, die H, eine unverzweigte Kohlenwasserstoffkette, insbesondere Methyl, Ethyl, *n*-Butyl, verzweigte Kohlenwasserstoffkette, insbesondere *iso*- und *tert*-Butyl, cyclischer Kohlenwasserstoff, polycyclischer Kohlenwasserstoff, Aromat, ungesättigter Kohlenwasserstoff, mehrfach ungesättigter Kohlenwasserstoff, (ein- oder mehrfach) substituierte Kohlenwasserstoffkette, (ein- oder mehrfach) substituierter cyclischer Kohlenwasserstoff und (ein- oder mehrfach) substituierter Aromat umfasst. Im Rahmen dieser Erfindung sollen als Kohlenwasserstoff oder Kohlenwasserstoffkette jeweils die zu diesem Kohlenwasserstoff oder dieser Kohlenwasserstoffkette entsprechenden (Alkyl-) Reste verstanden werden. Analog soll dies auch für Aromaten gelten, so dass ein Verweis auf einen Aromaten auch als eine Offenbarung einer auf diesem Aromaten basierenden Arylgruppe verstanden werden soll.

Die mittlere Schichtdicke der auf einem oberflächenmodifizierten Partikel angeordneten Beschichtungszusammensetzung beträgt vorzugsweise ≤ 50 µm, bevorzugt ≤ 30 µm, bevorzugt ≤ 25 µm, mehr bevorzugt ≤ 20 µm, weiter bevorzugt ≤ 10 µm und meist bevorzugt ≤ 5 µm.

Weiterhin wird die Aufgabe durch einen Formteil gelöst, welcher derartige oberflächenmodifizierte Partikel umfasst. Diese Partikel können beispielsweise als Effektpartikel oder als Füllstoff in dem Formteil enthalten sein.

Eine Lösung für die zugrundeliegende Aufgabe liegt somit in einem Formteil, umfassend ein oder mehrere zumindest teilweise ausgehärtete Bindemittel, sowie Partikel, die zumindest abschnittsweise eine hydrophobe Oberflächenbeschichtung aufweisen und die zumindest teilweise in das Bindemittel eingebettet sind. Dabei ist vorgesehen, dass die Partikel Trägerpartikel umfassen, die zumindest abschnittsweise mit einer Beschichtungszusammensetzung auf Basis von Monomeren des Typs A oberflächenbeschichtet sind, wobei die Monomere des Typs A eine Substanz der Struktur 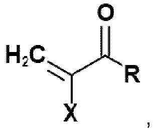 umfassen, wobei R ausgewählt ist aus einer Gruppe, die OR¹, NR¹, NR¹R² und CN umfasst.

Bevorzugt weicht ein Brechungsindex *n* der hydrophoben Oberflächenbeschichtung bei der Wellenlänge 589 nm um höchstens 0,1, bevorzugt 0,08, weiter bevorzugt 0,05, meist bevorzugt 0,03 von dem Brechungsindex *n* des einen Bindemittels oder den mehreren zumindest teilweise ausgehärteten Bindemitteln ab. Dadurch kann erreicht werden, dass die Farbe, die die Trägerpartikel haben oder die zusammen mit der Oberflächenbeschichtung und/oder Beschichtungszusammensetzung auf die Trägerpartikel aufgebracht ist, (zumindest nahezu) unverändert auch an der Oberfläche des Formteils wahrnehmbar ist. dadurch kann bereits vor der Herstellung eines Formteils deren spätere Farbe (beziehungsweise deren spätere optische Oberflächenerscheinung) bereits frühzeitig vorherbestimmt werden und die Herstellung einer Vielzahl von Formteilen als Testformteile vermieden werden.

Außerdem wir die Aufgabe durch ein Verfahren zur Herstellung oberflächenmodifizierter Partikel umfassend die Schritte:
- Bereitstellen partikulärer Trägerpartikel,
- Bereitstellen einer Beschichtungszusammensetzung auf Basis von Monomeren des Typs A, wobei die Monomeren des Typs A eine Substanz der Struktur 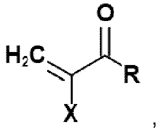 umfassen, wobei
   R ausgewählt ist aus einer Gruppe, die OR¹, NR¹, NR¹R² und CN umfasst,
- Vermischen der Trägerpartikel mit der Beschichtungszusammensetzung,
- Trocknung des Gemischs bei einer Temperatur oberhalb der Mindestfilmbildungstemperatur (MFT) der polymerisierbaren Komponente während des Eintrags von Scherenergie in das Gemisch, und
- Vernetzung der polymerisierbaren Komponente an der Oberfläche unter Ausbildung einer hydrophoben Beschichtung auf dem Trägerpartikel.

Es kann somit ein alternatives, preisgünstigeres und nachhaltigeres, oberflächenbeschichtetes Granulat (im Folgenden auch als Füllstoff bezeichnet) bereitgestellt werden, welches in einem energieeffizienten Verfahren herstellbar ist.

Jeder der im Zusammenhang mit dem Verfahren beschriebene Prozessschritt kann mehrere Unterschritte umfassen. Die Unterschritte können auch identisch sein. Beispielsweise kann eine Komponente in mehreren Chargen zugeführt werden. Ein Prozess kann somit ein oder mehrstufig sein.

Mehrere Verfahrensschritte und/oder deren Unterschritte können orts- und/oder zeitversetzt zu anderen Verfahrensschritten und/oder unterschritten durchgeführt werden.

Vorzugsweise erfolgt die Trocknung bei einer Temperatur von ≤ 200°C, bevorzugt ≤ 150°C, weiter bevorzugt ≤ 100°C, meist bevorzugt ≤ 80°C erfolgt. Dadurch kann der Energieaufwand der Herstellung dieser Partikel geringgehalten werden.

Insbesondere ist bevorzugt, dass die Trocknung durch einen warmen Fluidstrom, beispielsweise Luftstrom erfolgt. Bei dem warmen Luftstrom kann es sich beispielsweise um einen Strom von Abwärmeluft oder Abgas handeln. Alternativ oder ergänzend dazu hat es sich auch als vorteilhaft erwiesen, eine Mikrowellen- oder IR-Trockenanlage oder vergleichbare energieschonende Technologien zur Trocknung einzusetzen.

In einer bevorzugten Ausführungsform wird der Beschichtungszusammensetzung ein Farbstoff und/oder ein Pigment zugesetzt. Dadurch kann eine solche farbgebende Komponente zusammen mit dem Bindemittel auf der Oberfläche des Trägerpartikels fixiert sein. Dies ermöglicht besondere Farbeffekte in Verbundwerkstoffen, beispielsweise eine natursteinähnliche Optik. Ist wird somit möglich, die Farbe der (beschichteten) Partikel in gewünschter Weise einzustellen und nicht nur ein Produkt in Form eines funktionellen Granulates bereitzustellen, sondern ein Farbgranulat zu erzeugen. Als funktionelles Granulat wird im Rahmen dieser Erfindung eine reine Hydrophobierung ohne Farbgebung verstanden, wohingegen bei einem "Farbgranulat" die Beschichtungszusammensetzung zusätzlich zur Hydrophobierung auch dazu verwendet wird, Farbe und/oder Pigment auf den Trägerpartikel zu fixieren, um einen eingefärbten Füllstoff zu erhalten.

Um eine gleichmäßige Vermischung und Beschichtung zu erreichen ist bevorzugt, Klumpenbildung weitegehend zu vermeiden. Als ein besonders gut geeignetes Mittel zur Vermeidung übermäßiger Klumpenbildung hat sich als vorteilhaft erwiesen, dass die Trägerpartikel vor dem Vermischen der Trägerpartikel mit der Beschichtungszusammensetzung erwärmt und/oder getrocknet werden. Es hat sich als besonders vorteilhaft gezeigt, die Trägerpartikel vor dem Vermischen mittels einer Temperiereinrichtung bevorzugt auf eine Temperatur 10 - 50 °C, weiter bevorzugt 15 - 30 °C, meist bevorzugt 20 - 30 °C zu erwärmen.

Vorzugsweise erfolgt die Vermischung der Beschichtungszusammensetzung und den Trägerpartikeln und gegebenenfalls Pigment unter einem hohen Scherenergieeintrag. Als besonders bevorzugt hat sich dazu die Nutzung eines Zwangsmischers gezeigt. Auch dies hat Vorteile hinsichtlich der Vermeidung von Klumpenbildung.

Ebenso hat es sich (alternativ oder ergänzend zu oben genannten Maßnahmen) als vorteilhaft gezeigt, die Beschichtungszusammensetzung in Form einer wässrigen Dispersion einzusetzen. Bevorzugt handelt es sich dementsprechend bei der polymerisierbaren Komponente um eine wässrige Dispersion der polymerisierbaren Komponente, vorzugsweise gebildet aus A-Monomeren. Bevorzugt liegt die aus A-Monomeren gebildete polymerisierbare Komponente in wässriger Form emulgiert vor. Es hat sich gezeigt, dass die Verwendung derartiger wässrigemulgierter Dispersionen besonders vorteilhaft ist, da deren Eigenschaften vergleichsweise einfach über einen weiten Bereich einstellbar sind.

Bevorzugt liegt die Beschichtungszusammensetzung als Dispersion einer polymerisierbaren Komponente und/oder Substanz vor. Insbesondere ist bevorzugt, dass die polymerisierbare Komponente (zumindest teil-) reaktive A-Monomere und / oder Oligomere umfasst. Bevorzugt beträgt in der (bevorzugt als wässrige Dispersion vorliegenden) Beschichtungszusammensetzung der Anteil der polymerisierbaren Komponente und/oder des Monomers des Typs A und/oder dessen Folgeprodukte > 10 Masseprozent, weiter bevorzugt > 20 Masseprozent, meist bevorzugt > 30 Masseprozent. Die auf A-Monomeren basierte wässrige Polymer-Dispersion verfügt vorzugsweise über einen Polymer-Anteil im Bereich von 10 - 60 Masseprozent (Ma-%), bevorzugt 20 - 50 Ma-%, insbesondere bevorzugt mindestens 30 Ma-%. Dadurch kann eine gute Verarbeitbarkeit und eine ausreichend feste Bindung an der Oberfläche der Trägerpartikel erreicht werden.

Sofern im Rahmen dieser Erfindung keine anderen Angaben gemacht werden, sollen alle Prozentangaben als Masseprozent (Ma-%) in Bezug auf die Masse der zu beschichtenden Partikel verstanden werden. Massenanteile der oberflächenbeschichteten Partikel sollen - sofern nichts anderes angegeben ist - als bezogen auf eine Gesamtmasse eines Formteils verstanden werden.

Vorzugsweise liegt der Anteil der polymerisierbaren Komponente in Bezug auf die Masse der zu beschichtenden Partikel bei < 5 Ma-%, bevorzugt < 4 Ma-%, weiter bevorzugt < 3 Ma-% und besonders bevorzugt bei < 2 Ma-%, bezogen auf die Partikelmasse.

Als besonders bevorzugt haben sich auf A-Monomeren basierte Polymer-Dispersionen gezeigt, die eine vergleichsweise hohe MFT (Mindestfilmbildungstemperatur), eine niedrige Viskosität und einen ausreichend hohen Vernetzungsgrad und damit folglich Elastizität aufweisen.

In einer als wässrige Dispersion vorliegenden Beschichtungszusammensetzung beträgt deren Mindestfilmbildungstemperatur bevorzugt > 15 °C, weiter bevorzugt > 18 °C, mehr bevorzugt > 20 °C, meist bevorzugt > 25 °C. So kann gewährleistet werden, dass eine homogene Benetzung der Oberfläche der Trägerpartikel mit der Beschichtungszusammensetzung erreicht werden kann.

Vorzugsweise weist die polymerisierbare Komponente eine MFT von mindestens 10 °C, bevorzugt ≥ 15 °C, weiter bevorzugt ≥ 20 °C und meist bevorzugt ≥ 25 °C auf. Dadurch kann vermieden werden, dass eine vorzeitige, unkontrollierte Trocknung erfolgt.

Ebenfalls vorteilhaft für eine homogene Benetzung der Oberfläche der Trägerpartikel mit der Beschichtungszusammensetzung hat sich alternativ oder ergänzend dazu eine Viskosität der als wässrige Dispersion vorliegenden Beschichtungszusammensetzung von < 700 mPas, bevorzugt < 500 mPas, meist bevorzugt < 300 mPas gezeigt. Vorzugsweise liegt die Viskosität der Beschichtungszusammensetzung < 5000 mPas, bevorzugt < 2000 mPas, weiter bevorzugt < 1000 mPas, mehr bevorzugt < 500 mPas und meist bevorzugt < 300 mPas.

Eine solche auf A-Monomeren basierte Polymer-Dispersion lässt sich durch die sehr niedrige Viskosität und durch den polaren Charakter sehr gut auf die Partikel (auch als Granulate bezeichnet) aufziehen und Trocknen.

Umfasst die Beschichtungszusammensetzung ein auf A-Monomeren basiertes Polymer oder Oligomer als polymerisierbare Komponente, so ist bevorzugt, dass diese Beschichtungszusammensetzung (beziehungsweise die Polymer- oder Oligomer-Dispersion und/oder die polymerisierbare Komponente) selbstvernetzend ist. Außerdem kann die Handhabbarkeit der Beschichtungszusammensetzung und insbesondere die Prozessführung dadurch vereinfacht werden, dass die als wässrige Dispersion vorliegenden Beschichtungszusammensetzung selbstvernetzend ist.

Optional werden die Trägerpartikel in einem ersten Schritt mit der Beschichtungszusammensetzung versetzt und danach mit dem Pigment. Es ist aber auch möglich, die Trägerpartikel zuerst mit dem Pigment und danach mit der Beschichtungszusammensetzung zu beschichten. Schließlich besteht auch die Option die Beschichtungszusammensetzung und/oder die polymerisierbare Komponente mit dem Pigment vorzumischen und danach beides zusammen mit den Partikeln zu mischen.

Um die benötigte Scherenergie einzutragen, hat sich eine Vermischung über einen Zeitraum von vorzugsweise 2 - 30 Minuten, bevorzugt 3 - 20 Minuten, weiter bevorzugt 4 - 10 Minuten und insbesondere bevorzugt etwa 5 Minuten als vorteilhaft erwiesen. Optional kann der Mischprozess mechanisch zusätzlich mit Wirblern unterstützt werden.

Die Trocknung erfolgt anschließend vorzugsweise auf einem Trockenband, welches vorzugsweise mit Vibrorinne ausgerüstet ist. Bevorzugt wird während des Transports der Partikel auf dem Trockenband ein Luftstrom der oben genannten Temperatur, beispielsweise von ≤ 80°C über das Trockenband geführt.

Bevorzugt wird bei diesem Schritt Wasser ausgetragen, vorzugsweise vollständig.

Anschließend erfolgt die Vernetzung der Beschichtungszusammensetzung bzw. der polymerisierbaren Komponente der Beschichtungszusammensetzung. Je nach eingesetzten Materialien kann der Fortschritt der Vernetzung durch die Detektion von Kondensationsprodukten, beispielsweise von abgespaltenem Ammoniak, Alkoholen oder CO₂ verfolgt werden.

Bevorzugt wird die Trocknung und die Vernetzung der polymerisierbaren Komponente zumindest teilweise, bevorzugt vollständig örtlich und/oder zeitlich versetzt voneinander durchgeführt.

Um die Oberflächenbeschichtung möglichst nicht zu zerstören, ist bevorzugt, dass ab dem Zeitpunkt der beginnenden Vernetzung der Eintrag von Scherenergie auf ein Minimum reduziert wird.

Durch die vorgeschlagene örtliche und/oder zeitliche Trennung von Trocknung und Vernetzung kann die Trocknung unter Scherenergieeintrag erfolgen, was vorteilhaft für die Trocknungszeit und auch die Energiebilanz ist, wohingegen die Vernetzung davon separat ohne oder bei lediglich geringem Scherenergieeintrag erfolgen kann, was für eine stabile Oberflächenbeschichtung vorteilhaft ist.

Vorzugsweise erfolgt anschließend eine Schutzsiebung und die Bereitstellung für die (gegebenenfalls örtlich und/oder zeitlich beabstandete) Weiterverarbeitung.

Ein durch ein solches Verfahren hergestellter Partikel ist für eine Vielzahl von Anwendungen geeignet. Er weist eine hydrophobe Oberflächenbeschichtung auf und kann eine feste Bindung mit einem Bindemittel, beispielsweise einer Bindemittelmatrix, insbesondere einem umgebenden acrylathaltigen Bindemittel eingehen. Es hat sich zudem auch gezeigt, dass derart beschichtete Partikel auch in einer umgebenden Matrix aus Polyesterharz vorteilhafte Ergebnisse erzielen, welche vergleichbar den silanisierten Partikeln sind. Die für viele Anwendungen notwendige oder zumindest vorteilhafte Hydrophobierung kann somit erreicht werden, ohne dass teure und durch aufwändige Verfahren aufzubringende Silane gehandhabt werden müssten.

Als Trägerpartikel haben sich insbesondere anorganische Mineralien, rezyklierte Granulate und organische, nachwachsende Rohstoffgranulate als geeignet erwiesen.

Handelt es sich bei den Trägerpartikeln um ein mineralisches Granulat, ist dieses vorzugsweise ausgewählt aus einer Gruppe, die Quarzsand, Calciumcarbonat und Feldspat umfasst. Als rezyklierte Granulate haben sich Glasbruch, Granitbruch, Abfallsande und Gießereisande (einzeln oder als Gemisch) als bevorzugt gezeigt.

Bevorzugt ist ein Trägerpartikel ausgewählt aus einer Gruppe, die Oxide, Silikate, Phosphate, Carbonate, Sulfate, Anhydrite, Gläser, sowie Keramiken und amorphe Materialien umfasst.

Ein Trägerpartikel kann einer natürlichen Quelle entstammen, gezielt hergestellt sein oder aus einem Recyclingprozess gewonnen werden. Bei einem aus einem Recyclingprozess gewonnenen Füllstoff handelt es sich vorzugsweise um eine Recycling-Keramik, ein Recycling-Porzellan, oder ein Recycling-Glas.

Weitere Beispiele für bevorzugte Trägerpartikel sind (Na, K, Ca, Misch-)-Feldspate, Kalkstein, Marmor, Dolomit, BaSO₄, Talkum, MgCO₃, Wollastonit, Kaolin, Natron-Kalkglas, Borosilikatglas, Quarzglas (Generell) (farblos oder gefärbt, transparent oder deckend), Keramik, Porzellan, Mullit, Korund, Apatit, Muschelschalen, Aluminiumhydroxid, Magnesiumhydroxid, Zirkonoxid, Perlit, Bimsstein. Diese können allein oder mit gemischt mit einem anderen Trägerpartikel der oben genannten Gruppe oder gemischt mit einem anderen Trägerpartikel verwendet werden.

Weitere alternativ oder ergänzend einsetzbare Recyclingmaterialien sind zerkleinerte polymergebundenen Küchenspülen, Waschbecken, Duschtassen oder Badewannen auf Basis von z.B. ATH oder Carbonaten wie oben beschrieben. Das in diesen Materialien verwendete Polymer ist z.B. polyester- oder acrylbasiert. Ein Recyclingmaterial kann beispielsweise auch ein ggf. aufbereiteter Giesserei-Altsand oder recyclierte Sande sein. Es können auch Recyclingmaterialien eingesetzt werden, welche auf organischen Polymeren basieren, z.B. PET-Granulat, Gummigranulate, EPDM-Granulate, WPC-Granulate uvm..

In einer weiteren Ausführungsform ist bevorzugt, dass die eingesetzten Trägerpartikel einen Anteil an kristalliner Kieselsäure von < 0,1 Ma-% enthalten, also nahezu frei von Quarzsand, Quarzmehl oder auch Cristobalit und Tridymit sind und auch die alternativ dazu eingesetzten Materialien alleine oder in der Summe einen Anteil an kristalliner Kieselsäure < 0,1 Ma-% enthalten.

Alternativ zu Quarz werden bevorzugt andere Materialien in einer bestimmten Art und Weise eingesetzt, um die notwendigen Abriebfestigkeiten sicherzustellen Die Abriebbeständigkeit nach dem Taber Abrasion Test (DIN 14688 oder DIN 13310) liegt üblicherweise bei ≤ 35 mg/100 Zyklen, bevorzugt ≤ 30 mg/100 Zyklen, weiter bevorzugt ≤ 25 mg/100 Zyklen und insbesondere bevorzugt ≤ 20 mg/100 Zyklen.

In einer bevorzugten Ausführungsform wird alternativ oder ergänzend ein Trägerpartikel auf Basis von nachwachsenden Rohstoffen eingesetzt. Vorzugsweise ist ein solcher Füllstoff ausgewählt aus einer Gruppe, die Nussschalen, Olivenkerne, Pflaumensteine, Hanf, und Kümmelpresskuchen, Fasern, Hülsen, Samen oder sonstige Pflanzenbestandteile umfasst. Bevorzugt werden diese allein oder in Kombination mit einem oder mehreren anderen Trägerpartikeln auf Basis von nachwachsenden Rohstoffen eingesetzt. Vorzugsweise liegt mindestens einer dieser Trägerpartikel als Mehl oder als auf eine bestimmte Körnung gemahlene Partikel vor.

Vorzugsweise weisen die (unbeschichteten Träger-) Partikel eine mittlere Größe (d₅₀, bevorzugt gemessen mittels Siebanalyse oder Laserbeugung) im Bereich von 5 µm - 15 mm, bevorzugt 10 µm - 10 mm, weiter bevorzugt 20 µm - 8 mm und meist bevorzugt 50 µm - 2 mm auf. Sofern im Rahmen dieser Erfindung keine anderen Angaben gemacht werden, sollen alle Korngrößenangaben als mittlere Korngröße d₅₀ (Siebanalyse oder Laserbeugung) verstanden werden. Ob die mittlere Korngröße per Siebanalyse oder Laserbeugung zu bestimmen ist, hängt im Wesentlichen von der zu erwartenden mittlere Korngröße d₅₀ ab: Ein Fachmann weiß, dass zur Größenbestimmung größerer mittlerer Korngrößen die Siebanalyse geeignet ist, wohingegen zur Größenbestimmung kleinerer mittlerer Korngrößen die Laserbeugung geeignet ist.

Weiterhin wird die Aufgabe durch einen Formteil gelöst, welcher derartige oberflächenmodifizierte Partikel umfasst. Diese Partikel können beispielsweise als Effektpartikel oder als Füllstoff in dem Formteil enthalten sein. Sofern im Folgenden auf Effektpartikel oder einen Füllstoff eines Formteils oder einer Masse zur Herstellung eines Formteils verwiesen wird, sollen darunter Effektpartikel oder einen Füllstoff verstanden werden, die zumindest eine Art der oben beschriebenen Partikel umfassen.

Eine Lösung für die zugrundeliegende Aufgabe liegt somit in einem Formteil, umfassend ein oder mehrere zumindest teilweise ausgehärtete Bindemittel, sowie Partikel, die zumindest abschnittsweise eine hydrophobe Oberflächenbeschichtung aufweisen und die zumindest teilweise in das Bindemittel eingebettet sind. Dabei ist vorgesehen, dass die Partikel Trägerpartikel umfassen, die zumindest abschnittsweise mit einer Beschichtungszusammensetzung auf Basis von Monomeren des Typs A oberflächenbeschichtet sind, wobei die Monomeren des Typs A eine Substanz der Struktur 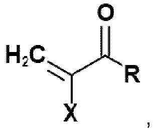 umfassen, wobei R ausgewählt ist aus einer Gruppe, die OR¹, NR¹, NR¹R² und CN umfasst.

Bevorzugt weicht ein Brechungsindex *n* der hydrophoben Oberflächenbeschichtung bei der Wellenlänge 589 nm um höchstens 0,1, bevorzugt 0,08, weiter bevorzugt 0,05, meist bevorzugt 0,03 von dem Brechungsindex *n* des einen Bindemittels oder den mehreren zumindest teilweise ausgehärteten Bindemitteln ab. Dadurch kann erreicht werden, dass die Farbe, die die Trägerpartikel haben oder die zusammen mit der Oberflächenbeschichtung und/oder Beschichtungszusammensetzung auf die Trägerpartikel aufgebracht ist, (zumindest nahezu) unverändert auch an der Oberfläche des Formteils wahrnehmbar ist. dadurch kann bereits vor der Herstellung eines Formteils deren spätere Farbe (beziehungsweise deren spätere optische Oberflächenerscheinung) bereits frühzeitig vorherbestimmt werden und die Herstellung einer Vielzahl von Formteilen als Testformteile vermieden werden.

Der Füllstoff kann mehrere Komponenten umfassen. Wie oben dargelegt, umfasst der Füllstoff zumindest eine Art der oben beschriebenen Partikel. Umfasst der Füllstoff mehrere Komponenten, kann ein Verhältnis dieser Komponenten im Füllstoff zueinander in einem vergleichsweise breiten Rahmen variieren und somit an die von dem Formteil erwarteten Eigenschaften angepasst werden. So kann beispielsweise bei einem bevorzugten Füllstoff, der zwei, eine erste und eine zweite, Komponenten umfasst, ein Verhältnis der ersten Komponente zu der zweiten Komponente im Bereich von 1:99 - 99:1 vorliegen. Als bevorzugt hat sich ein Verhältnis der ersten zu der zweiten Komponente im Bereich von 50:50 - 98:2, weiter bevorzugt 60:40 - 95:5 und insbesondere bevorzugt 75:25 - 90:10 erwiesen. Bevorzugt kann bei einem Füllstoff, der drei, eine erste, eine zweite und eine dritte Komponente umfasst, ein Verhältnis der ersten Komponente zu der zweiten Komponente zu der dritten Komponente im Bereich von 1:1:98 bis 1:98:1 bis 98:1:1 vorliegen, wobei ausdrücklich darauf hingewiesen wird, dass die Mengenanteile der drei Komponenten unabhängig voneinander in dem oben genannten Verhältnis variiert werden können und es dabei nicht zwingend erforderlich ist, dass zwei Komponenten im Verhältnis 1:1 vorliegen. Bevorzugt ist jedoch ein Verhältnis von im Wesentlichen 1:1:1.

Gemäß einer bevorzugten Ausführungsform liegt der Anteil der einzelnen Füllstoffkomponenten bezogen auf den gesamten Füllstoff jeweils im Bereich von 0,01 - 99,99 Gew.-%, bevorzugt 0,01 - 90 Gew.-%, bevorzugt 0,01 - 80 Gew.-%, weiter bevorzugt 0,01 - 70 Gew.-%, besonders bevorzugt 0,01 - 60 Gew.-%, insbesondere bevorzugt 0,01 - 50 Gew.-% und speziell bevorzugt 0,01 - 40 Gew.-%. Durch die Zugabe einer Füllstoffkomponente mit einem jeweiligen Gewichtsprozent bzw. Massenanteil bezogen auf das Gewicht bzw. die Masse des gesamten Füllstoffs sind die Eigenschaften der resultierenden Füllstoffmischung und damit auch eine Eigenschaft des damit hergestellten Formteils zumindest in einem gewissen Rahmen vorteilhaft einstellbar.

In einem wie oben beschriebenen Formteil sind die oben beschriebenen Partikel (beispielsweise als ein Füllstoff) nach dem Polymerisieren des Bindemittels in einer Bindemittelmatrix fixiert, so dass das Formteil dauerhaft seine Gestalt behält. Vorzugsweise ist ein Formteil ausgewählt aus einer Gruppe, die Küchenspülen, Küchenarbeitsplatten, Waschbecken, Duschtassen und -kabinen, Toiletten, Badewannen, Platten, Bodenbeläge, Möbelteile, Trennwände und Fliesen umfasst.

Ein solches Formteil kann auch nachbearbeitet werden, z.B. chemisch und/oder physikalisch sowie mechanisch. Bevorzugt ist einer der Nachbearbeitungsschritte ausgewählt aus einer Gruppe, die tempern, bestrahlen (UV, IR...), schneiden, bohren, fräsen, biegen, sägen, schleifen und polieren umfasst.

Die gewünschte Gestalt erhält das Formteil beispielsweise im Fall von Küchenspülen vorzugsweise dadurch, dass die Zusammensetzung in Negativform gefüllt wird und darin (zumindest teilweise) aushärtet. Derartige Formteile werden wie oben erwähnt in sehr vielen Anwendungen genutzt. Von besonderer Bedeutung sind Anwendungen im Küchen- und Sanitärbereich, beispielsweise in Form von Wasch- oder Spülbecken, Duschtassen und Badewannen. Formteile dieser Art haben den Vorteil, dass sie aufgrund der geringen Größe der Füllstoffpartikel und der variablen Anordnung der Füllstoffpartikel zueinander in ihrer Geometrie nahezu nicht beschränkt sind. So sind auch Wasch- oder Spülbecken, Duschtassen und Badewannen in geometrischen Formen herstellbar, die mit anderen Techniken nicht realisierbar sind. Durch die Oberflächenbeschichtung der Partikel werden neue optische Effekte ermöglicht und besonders klare Farbeindrücke realisierbar.

Vorzugsweise ist ein Formteil herstellbar durch ein Thermoformverfahren, Gelcoat- oder Mineralgussverfahren, unabhängig von der Art des Formteils und dessen Verwendung.

Vorzugsweise weist ein solches Formteil, das beispielsweise für Küchenspülen eingesetzt werden könnte, einen Füllgrad von mindestens 70 - 75 Gew.-% Füllstoff auf.

Weitere Vorteile, Ziele und Eigenschaften der vorliegenden Erfindung werden anhand nachfolgender Beispiele sowie der Beschreibung der anliegenden Figuren erläutert. Dabei zeigt:

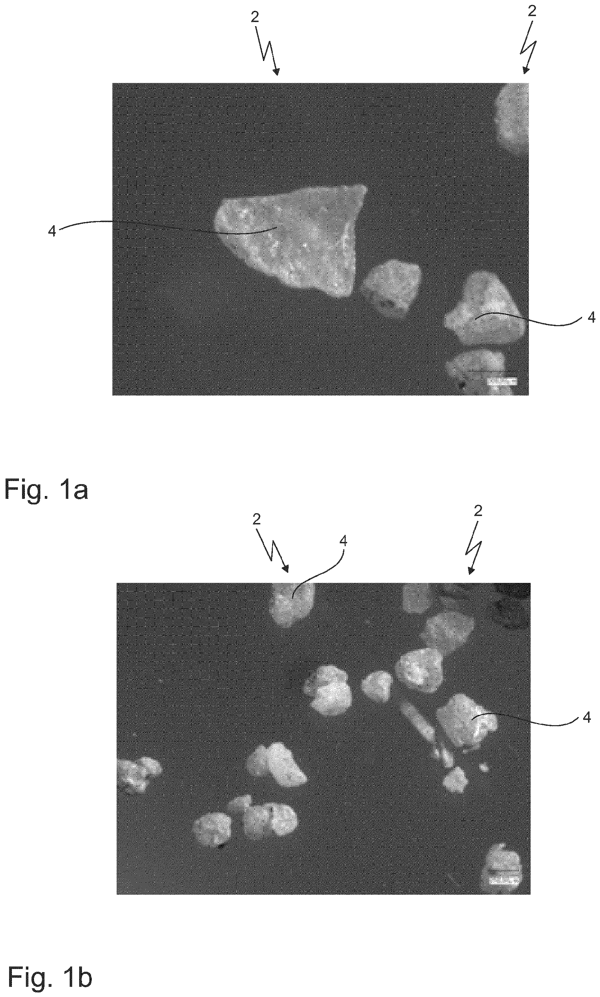

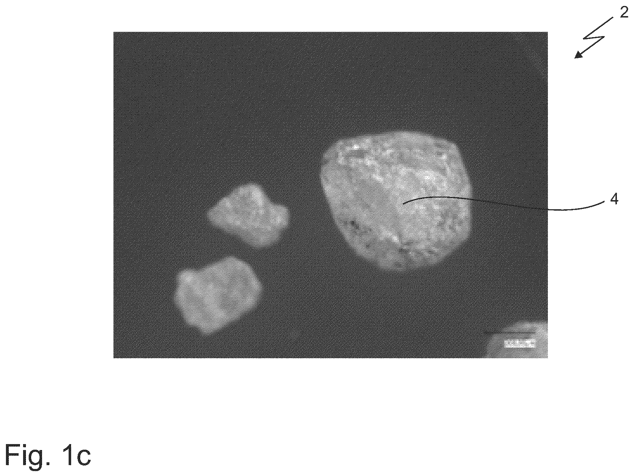

- Fig. 1a-c: mikroskopische Aufnahmen beschichteter Partikel.

Figuren 1a - 1c zeigen mikroskopische Aufnahmen beschichteter Partikel. Als Trägerpartikel wurde Quarz verwendet. Die Quarzpartikel wurden mit einer grauen Beschichtung versehen. Auf den Darstellungen ist der gleichmäßige Überzug der Trägerpartikel mit der Beschichtungszusammensetzung zu erkennen. Dies beschichteten Partikel sind sehr homogen beschichtet und weisen eine gleichmäßige Farbgebung auf.

Für die in den Figuren 1a - 1c dargestellten Abbildungen wurden Füllstoffpartikel auf einen Objektträger gebracht und vereinzelt. Die Partikel wurden unter einem Keyence-Lasermikroskop VK-X mit verschiedenen Vergrößerungen 5x, 10x, 20x, 50x optisch untersucht, um die Eigenschaften der Oberflächen darstellen und visualisieren zu können. Der in den Figuren jeweils unten rechts dargestellte Balken stellt als Referenz eine Länge von 200 µm dar.

Die in den Figuren 1a - 1c dargestellten Partikel wurden aus einer Probe entnommen, die erhalten wurde, indem 400 kg Quarzpartikel einer Körnung zwischen 0,1 - 0,5 mm mit einer grauen Beschichtungszusammensetzung beschichtet wurden. Die Beschichtungszusammensetzung umfasst dazu 4,8 kg Weißpigment, 80 g Blaupigment, 480 g Schwarzpigment und 4,8 kg Bindemittel basierend auf Monomeren des Typs A.

Die Fixierung der Beschichtungszusammensetzung auf der Oberfläche der Quarzpartikel erfolgte bei einer Temperatur von 100 °C. es hat sich gezeigt, dass es vorteilhaft ist, die Quarzpartikel vor dem Vermischen mit der Beschichtungszusammensetzung auf eine Temperatur von etwa 20 °C vorzuwärmen. Wurden die Quarzpartikel mit der (Umgebungs-) Temperatur von etwa 10 °C eingesetzt, traten Anhaftungen am Rührwerkzeug sowie Verklumpungen des Produkts auf. Ein Einfluss der ebenfalls mit einer Temperatur von etwa 10 °C eingesetzten Beschichtungszusammensetzung wurde dagegen nicht erkannt.

Die so erhaltenen beschichteten Partikel wurden auf deren Eignung zur Verwendung in einer Gießmasse zur Herstellung eines Verbundwerkstoffs untersucht. Ein wesentliches Kriterium für diese Eignung sind die rheologischen Eigenschaften, die insbesondere darauf hinweise liefern können, welche Schichtdicken ein Verbundwerkstoff aufweisen darf, wie komplex und fein die Verbundwerkstoffgeomentrie sein darf und ob mit Komplikationen beim Einfüllen der Gießmasse in eine Gießform zu rechnen ist.

Zur Messung der rheologischen Eigenschaften wurden 100 g der wie oben beschriebenen erhaltenen beschichteten Partikel mit 42,8 g Polyesterharz vermischt. Nach einer Mischzeit von etwa 1 min wurde das fließfähige Material in einen Messzylinder überführt, welcher anschließend in die Messvorrichtung des Anton Paar MC 302 Rheometers eingesetzt wurde. Die Messung der Viskosität erfolgte durch ein Zylinder-Spindelverfahren bei 25 °C. Es wurde die Viskosität in Abhängigkeit der Scherrate (0 - 200 1/s) gemessen.

Als Vergleich zu den gemäß einer Ausführungsform der vorliegenden Erfindung ausgebildeten beschichteten Partikeln wurden konventionell eingefärbte Quarzpartikel derselben (Träger-) Partikelgröße (0,1 - 0,5 mm) und Farbe (grau) herangezogen. Die Vermessung dieser Vergleichspartikel erfolgte analog zu dem oben beschriebenen Verfahren. Die Ergebnisse der vergleichenden Untersuchung der rheologischen Eigenschaften an jeweils zwei Proben der Vergleichspartikel und der erfindungsgemäßen Partikel sind in Tabelle 1 dargestellt.

**Tabelle 1: Vergleich rheologischer Eigenschaften**

| Bezeichnung | Startviskosität [Pa*s] | Umkehrviskosität [Pa*s] | Endviskosität [Pa*s] |
|---|---|---|---|
| Vergleichsprobe 1 | 41,5 | 7,0 | 29,0 |
| Vergleichsprobe 2 | 40,0 | 7,0 | 28,5 |
| Probe 1 mit Bindemittel auf Basis von A | 51,0 | 7,0 | 35,0 |
| Probe 2 mit Bindemittel auf Basis von A | 48,5 | 7,0 | 37,5 |

Wie Tabelle 1 zu entnehmen ist, liegen die rheologischen Eigenschaften der vermessenen Proben im selben Größenbereich, auch wenn die Startviskosität der Proben mit den erfindungsgemäßen Partikeln gegenüber den Vergleichsproben um etwa 10 Pa*s erhöht ist. Die Differenz der Endviskosität zwischen den Proben mit den erfindungsgemäßen Partikeln gegenüber den Vergleichsproben ist sogar deutlich geringer und die Umkehrviskosität liegt sogar bei allen vermessenen Proben auf dem selben Wert, nämlich bei 7,0 Pa*s. Diese Ergebnisse zeigen, dass die erfindungsgemäßen Partikel zum Einsatz in einer Gießmasse geeignet sind. Es besteht die Vermutung, dass durch die Anpassung einiger Parameter die rheologischen Eigenschaften der erfindungsgemäßen Partikel sogar noch ähnlicher zu denjenigen der Vergleichsproben einstellbar sein könnten. Beispielsweise könnte eine schonendere Trocknung vorteilhaft sein. Ergebnisse zu diesbezüglichen Untersuchungen liegen jedoch noch nicht vor.

Bei der Testung einer Gießmasse mit erfindungsgemäßen Partikeln einer Ausführungsform mit einer grauen Beschichtung der Trägerpartikel konnte sogar festgestellt werden, dass eine solche Gießmasse bei ansonsten identischer Rezeptur sogar verbesserte Eigenschaften aufweist.

So konnte beispielsweise festgestellt werden, dass Prüfkörper bei der Testung des Thermoschock-Verhalten nach DIN EN 13310 hinsichtlich deren Aufhellungsverhalten nach CIE-Lab-Farbraum wesentlich besser abschnitten. Die Aufhellung war geringer und dadurch besser als bei der Verwendung eines aus dem Stand der Technik bekannten Bindemittels. Die entsprechenden Ergebnisse sind in Tabellen 2a und 2b dargestellt. Insbesondere ist zu erkennen, dass die Differenz Δ des L-Werts signifikant von 6,8 für den Prüfkörper mit bekannten Partikeln auf etwa 4,2 für den Prüfkörper mit erfindungsgemäßen Partikeln sinkt.

**Tabelle 2a: Aufhellungsverhalten nach DIN EN 13310 eines Prüfkörpers mit erfindungsgemäßen Partikeln**

| Farbwerte (color) | Prüfkörper 1 (erf.) vor | Prüfkörper 1 (erf.) nach | Δ |
|---|---|---|---|
| L | 63,87 | 68,06 | 4,19 |
| a | 0,45 | -0,11 | 0,56 |
| b | 0,84 | 4,09 | 3,25 |

**Tabelle 2b: Aufhellungsverhalten nach DIN EN 13310 eines Prüfkörpers mit bekannten Partikeln**

| Farbwerte (color) | Vergleich 1 (bek.) vor | Vergleich 1 (bek.) nach | Δ |
|---|---|---|---|
| L | 56,47 | 63,27 | 6,8 |
| a | 1,73 | 0,66 | 1,07 |
| b | 3,44 | 4,88 | 1,44 |

Außerdem konnte festgestellt werden, dass im Vergleich zu Gießmassen mit aus dem Stand der Technik bekannten Partikeln das Absetzverhalten in der Matrix wesentlich stabilisierter ist. Dies führt dazu, dass es zu einer gleichmäßigeren Verteilung der Partikel in der Matrix kommt, was mit einem reduzierten Absinkverhalten erklärbar sein könnte. Bei daraus hergestellten Formteilen weisen die Rückseiten dementsprechend eine optisch ansprechendere Oberfläche auf, insbesondere hinsichtlich einer gleichmäßigeren Verteilung der oberflächlich erkennbaren Partikel.

Bei der Verwendung von Gießmassen mit erfindungsgemäßen Partikeln konnte im Vergleich zu Gießmassen mit Partikeln, die mit einem herkömmlichen Bindemittelsystem (anorganisch oder organisch) beschichtet wurden, ein gleichwertiges Fließverhalten festgestellt werden. Dementsprechend sind bereits vorhandene Anlagen für die Verwendung und Verarbeitung von Gießmassen mit erfindungsgemäßen Partikeln geeignet, meist sogar ohne Umrüstungen.

Untersuchungen mit verschiedenen Trägerpartikeln und verschiedenen Partikelgrößen der Trägerpartikel haben gezeigt, dass bei vergleichsweise kurzen Mischzeiten (beispielsweise ≤ 1 Min) verschiedenste Minerale zu den erfindungsgemäßen Partikeln umgesetzt werden können. Die hydrophobe Oberflächenbeschichtung basierend auf Monomeren des Typs A ist unter anderem geeignet, um feldspathaltige Sande und sehr feine Partikel (beispielsweise Siebungen < 315 µm oder < 200 µm) zu beschichten. Insbesondere für sehr feine Partikel musste dabei jedoch die eingesetzte Bindemittelmenge (in Massenprozent bezogen auf die Masse der Trägerpartikel) erhöht werden, was jedoch insbesondere mit dem größeren Oberfläche-zu-Volumen-Verhältnis (und damit auch Oberfläche-zu-Masse-Verhältnis) der feineren Partikel zu begründen ist. In allen Fällen konnte eine sehr gute gleichmäßige Beschichtung erreicht werden, die optisch sehr homogen und gleichmäßig wirkt.

Die Eignung eines Beschichtungssystems, das auf Monomeren des Typs A basiert, zur Beschichtung von Partikeln verschiedener Körnung wurde auch durch die folgenden Vergleiche bestätigt. Als Trägerpartikel wurden für die in den Tabelle 3 dargestellten Rezepturen jeweils Quarzsande verschiedener Körnungen verwendet und die unten in der Tabelle angegebenen Farbwerte gemessen.

**Tabelle 3: Rezepturen und Farbwerte für schwarz beschichtete Partikel**

| **Komponente** / **Messwert** | **Versuchspartikel schwarz 1** | **Versuchspartikel schwarz 2** |
|---|---|---|
| Trägerpartikel | 100 kg Quarzsand (0,1 - 0,5 mm) | 100 kg Quarzsand (0,3 - 0,8 mm) |
| Bindemittel | 1200 g Bindemittel (basierend auf A-Typ-Monomeren) | 1200 g Bindemittel (basierend auf A-Typ-Monomeren) |
| Lösungsmittel Farbstoff | 500 g Wasser | 500 g Wasser |
| | 500 g Schwarzpigment | 500 g Schwarzpigment |

| **Color L*a*b*** | | |
|---|---|---|
| L*: | 38,1 | 37,3 |
| a*: | 0,1 | 0,1 |
| b*: | 0,4 | 0,3 |

Wie Tabelle 3 zu entnehmen ist, konnte auch bei unterschiedlicherer Partikelgröße aber ansonsten identischer Rezeptur eine gleichmäßige Beschichtung erreicht werden. Die für die beiden Versuchspartikel gemessenen Farbwerte sind äußerst ähnlich. Der optische Farbeindruck ist ein sehr homogenes Schwarz.

Von den in Tabelle 3 dargestellten Versuchspartikeln wurden Prüfkörper unter Verwendung eines Polyesterharzes gegossen. Für den Prüfkörper 1 wurden die Versuchspartikel 2 als einziger Bestandteil einer Füllstoffzusammensetzung in das Polyesterharz eingegossen. Für den Prüfkörper 2 wurden die Versuchspartikel 2 dagegen als Bestandteil einer Füllstoffzusammensetzung eingesetzt, die zusätzlich Versuchspartikel 1, sowie einen schwarzen Farbstoff und Quarzmehl enthält. Die Rezepturen der Gießmassen sowie die für die daraus erhaltenen Prüfkörper gemessenen Farbwerte sind in der folgenden Tabelle 4 gelistet.

**Tabelle 4**

| | **Prüfkörper 3** | **Prüfkörper 4** |
|---|---|---|
| Füllstoffzusammensetzung | 100 % Versuchspartikel schwarz 2 | 77 % Versuchspartikel schwarz 2 |
| | | 5 % Versuchspartikel schwarz 1 |
| | | 8 % schwarzer Farbsand |
| | | 10 % Quarzmehl |

| **Rezeptur** | | |
|---|---|---|
| | 70 g Füllstoffzusammensetzung | |
| | 30 g Polyesterharz | |
| | 0,6 g Polymerisationsinitiator (Methylethylketonperoxid) | |

| **Color L*a*b*** | | |
|---|---|---|
| L*: | 26,2 | 26,1 |
| a*: | 0,1 | 0,1 |
| b*: | -0,4 | -0,4 |

Wie Tabelle 4 zu entnehmen ist, weichen die an den beiden Prüfkörpern gemessenen Farbwerte lediglich äußerst geringfügig voneinander ab. Bemerkenswert ist auch, dass die Farbe in Prüfkörper jeweils nur geringfügig von derjenigen der Versuchspartikel abweicht. Dies hat bei der Herstellung von Formteilen aus Gießmassen einen wesentlichen Vorteil, da die Farbe des Formteils bereits vor dessen Herstellung nahezu exakt durch die Auswahl der entsprechend farbig beschichteten Partikel vorherbestimmt werden kann. Dies reduziert die Anzahl von Testkörpern, die vor einer Produktion einer Großserie von Formteilen hergestellt werden muss, um die optische Erscheinung der Formteile genau auf die Anforderungen hin einstellen zu können.

Die Prüfkörper 3 und 4 wurden auch einem Test unterzogen, der Farbveränderungen bzw. das Ausbleichen der Farbe nach einer Behandlung mit heißem Wasser detektiert. Dazu wurden die Prüfkörper fest in ein Behältnis eingespannt, das anschließend mit entionisiertem Wasser gefüllt wird, sodass die Prüfkörper ständig vollständig vom Wasser umgeben sind. Durch eine Temperiereinrichtung wird die Temperatur des Wassers innerhalb von 30 Minuten auf 90 °C angehoben. Nach Erreichen dieser Soll-Temperatur wird das Wasser für 8 Stunden bei 90 °C gehalten, so dass jeder Prüfkörper diese Zeit dem heißem Wasser ausgesetzt bleibst. Die Leistung der eingebauten Umwälzpumpe beträgt 5 Liter pro Minute, so dass eine konstante Temperatur und gleichmäßige Temperaturverteilung innerhalb des Behältnisses über den Versuchszeitraum gewährleistet werden kann.

Nach Ablauf der festgelegten Behandlungszeit wird das heiße Wasser abgelassen und die Prüfkörper abgekühlt. Anschließend werden die Prüfkörper kolorimetrisch vermessen. Die Ergebnisse sind für den Prüfkörper 1 in Tabelle 5 dargestellt.

**Tabelle 5: Vergleich der Farbwerte des Prüfkörpers 1 vor und nach Heißwasserbehandlung**

| | **CIE-Lab vor Test** | **CIE-Lab nach Test** | **Δ-Werte** | **Δ E-Wert** |
|---|---|---|---|---|
| Prüfkörper 1 | L*: 26,18 | L*: 26,07 | ΔL*: 0,11 | 0,5 |
| | a*: 0,1 | a*: 0,07 | Δa*: 0,03 | |
| | b*: -0,4 | b*: 0,08 | Δb*: 0,48 | |

Wie den Werten aus Tabelle 5 zu entnehmen ist, konnte durch die erfindungsgemäßen Partikel nicht nur ein sehr homogenes Schwarz bereitgestellt werden, sondern auch die Verarbeitung von Füllstoffen mit diesen Partikeln verbessert werden. Diese Partikel harmonieren sehr gut mit wässrigen Suspensionen und Wasser und sind auf bekannten Maschinen verarbeitbar. Zudem zeigen die Tests an Prüfkörpern bei der Farbe Schwarz äußerst gute Werte hinsichtlich der Aufhellung durch langen Kontakt mit heißem Wasser. Der an dem Beispielprüfkörper 1 gemessene ΔE-Wert von lediglich 0,5 liegt deutlich unterhalb der Grenze von 0,8 ΔE, die lediglich von der Gruppe der in diesem Test besten Verbundwerkstoffe unterschritten wird. Für Verbundwerkstoffe typische Werte in diesem Test liegen meist in einem Bereich von bis 3 ΔE.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

Die Anmelderin weist darauf hin, dass alle bezüglich der Partikel und/oder des Formteils offenbarte Merkmale auch bevorzugte Ausgestaltungen des oben beschriebenen Verfahrens darstellen. Ebenso sollen alle im Zusammenhang mit dem Verfahren offenbarten Merkmale auch die Partikel und/oder das Formteil spezifizieren.

### Bezugszeichenliste

- 2: Partikel,
- 4: Oberflächenschicht, oberflächennahen Schicht,

## Patentansprüche

1. Partikel mit einer zumindest abschnittsweise hydrophoben Oberflächenbeschichtung, umfassend Trägerpartikel, die zumindest abschnittsweise mit einer Beschichtungszusammensetzung auf Basis von Monomeren des Typs A oberflächenbeschichtet sind, wobei die Monomeren des Typs A eine Substanz der Struktur 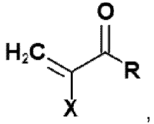
umfassen, wobei
R ausgewählt ist aus einer Gruppe, die OR¹, NR¹, NR¹R² und CN umfasst.

2. Partikel nach Anspruch 1,
**dadurch gekennzeichnet, dass**
X gleich H oder eine Kohlenwasserstoffkette ist, bevorzugt eine unverzweigte Kohlenwasserstoffkette und insbesondere bevorzugt CH₃ ist.

3. Partikel nach Anspruch 1 oder 2,
**dadurch gekennzeichnet, dass**
wobei R¹ und/oder R² ausgewählt ist aus einer Gruppe, die H, unverzweigte Kohlenwasserstoffkette, insbesondere Methyl, Ethyl, n-Butyl, verzweigte Kohlenwasserstoffkette, insbesondere iso- oder tert-Butyl, cyclischer Kohlenwasserstoff, polycyclischer Kohlenwasserstoff, Aromat, ungesättigter Kohlenwasserstoff, mehrfach ungesättigter Kohlenwasserstoff, (ein- oder mehrfach) substituierte Kohlenwasserstoffkette, (ein- oder mehrfach) substituierter cyclischer Kohlenwasserstoff und (ein- oder mehrfach) substituierter Aromat umfasst.

4. Partikel nach einem der vorangegangenen Ansprüche,
**dadurch gekennzeichnet, dass**
eine mittlere Schichtdicke der auf einem oberflächenmodifizierten Partikel angeordneten Beschichtungszusammensetzung ≤ 50 µm, bevorzugt ≤ 30 µm, bevorzugt ≤ 25 µm, mehr bevorzugt ≤ 20 µm, weiter bevorzugt ≤ 10 µm, meist bevorzugt ≤ 5 µm.

5. Partikel nach einem der vorangegangenen Ansprüche,
**dadurch gekennzeichnet, dass**
die Trägerpartikel eine mittlere Korngröße (d50, Laserbeugung und/oder Siebanalyse) von ≤ 10 mm, bevorzugt ≤ 5 mm, mehr bevorzugt ≤ 3 mm, weiter bevorzugt ≤ 2 mm, insbesondere bevorzugt ≤ 1000 µm, gegebenenfalls auch ≤ 500 µm, und/oder 10 µm - 5 mm, bevorzugt 30 µm - 3 mm, weiter bevorzugt 50 µm - 2 mm aufweisen.

6. Partikel nach einem der vorangegangenen Ansprüche,
**dadurch gekennzeichnet, dass**
die Trägerpartikel ausgewählt sind aus einer Gruppe, die ein mineralisches Granulat, insbesondere Quarzsand, Dolomit, Calciumcarbonat oder Feldspat; ein rezykliertes Granulat, insbesondere Glasbruch, Porzellan, Granitbruch, Abfallsand oder Gießereisand; und ein nachwachsendes Rohstoffgranulat, insbesondere auf Basis von Olive, Pflaume, Nussschale, Hanf oder Kümmelpresskuchen umfasst.

7. Partikel, nach einem der vorangegangenen Ansprüche,
**dadurch gekennzeichnet, dass**
sie ein Pigment umfassen, das auf einer Oberfläche der Trägerpartikel gebunden ist, wobei eine Massenanteil des Pigments bezogen auf die Masse der Partikel ≤ 10 %, bevorzugt ≤ 5 %, mehr bevorzugt ≤ 3 %, weiter bevorzugt ≤ 2 %, insbesondere bevorzugt ≤ 1 % ist und/oder 0,1 % - 2 %, bevorzugt 0,3 % - 1,5 %, weiter bevorzugt 0,5 % - 1 % beträgt.

8. Verfahren zur Herstellung oberflächenmodifizierter Partikel umfassend die Schritte:
- Bereitstellen partikulärer Trägerpartikel,
- Bereitstellen einer Beschichtungszusammensetzung auf Basis von Monomeren des Typs A, wobei die Monomeren des Typs A eine Substanz der Struktur 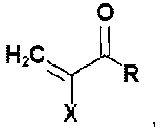 umfassen, wobei
R ausgewählt ist aus einer Gruppe, die OR¹, NR¹, NR¹R² und CN umfasst,
- Vermischen der Trägerpartikel mit der Beschichtungszusammensetzung,
- Trocknung des Gemischs bei einer Temperatur oberhalb der Mindestfilmbildungstemperatur (MFT) der polymerisierbaren Komponente während des Eintrags von Scherenergie in das Gemisch, und
- Vernetzung der polymerisierbaren Komponente an der Oberfläche unter Ausbildung einer hydrophoben Beschichtung auf dem Trägerpartikel.

9. Verfahren nach Anspruch 8,
**dadurch gekennzeichnet, dass**
die Trocknung bei einer Temperatur von ≤ 200°C, bevorzugt ≤ 150°C, weiter bevorzugt ≤ 100°C, meist bevorzugt ≤ 80°C erfolgt.

10. Verfahren nach Anspruch 8 oder 9,
**dadurch gekennzeichnet, dass**
die Trocknung durch einen warmen Fluidstrom, bevorzugt Luftstrom, weiter bevorzugt Abwärmeluft oder Abgas erfolgt, und/oder mittels einer Mikrowellen- oder IR-Trockenanlage durchgeführt wird.

11. Verfahren nach einem der Ansprüche 8 - 10,
**dadurch gekennzeichnet, dass**
die Trocknung und die Vernetzung der polymerisierbaren Komponente zumindest, teilweise bevorzugt vollständig örtlich und/oder zeitlich versetzt voneinander durchgeführt werden.

12. Verfahren nach einem der Ansprüche 8 - 11,
**dadurch gekennzeichnet, dass**
die Trägerpartikel vor dem Vermischen der Trägerpartikel mit der Beschichtungszusammensetzung erwärmt und/oder getrocknet werden, wobei die Trägerpartikel vor dem Vermischen mittels einer Temperiereinrichtung bevorzugt auf eine Temperatur 10 - 50 °C, weiter bevorzugt 15 - 30 °C, meist bevorzugt 20 - 30 °C erwärmt werden.

13. Verfahren nach einem der Ansprüche 8 - 12,
**dadurch gekennzeichnet, dass**
die Beschichtungszusammensetzung eine wässrige Dispersion ist,
- in der der Anteil des Monomers des Typs A und/oder dessen Folgeprodukte bevorzugt > 20 Masseprozent, weiter bevorzugt > 25 Masseprozent, meist bevorzugt > 30 Masseprozent beträgt,
- deren Mindestfilmbildungstemperatur bevorzugt > 15 °C, weiter bevorzugt > 18 °C, mehr bevorzugt > 20 °C, meist bevorzugt > 25 °C beträgt,
- deren Viskosität < 700 mPas, bevorzugt < 500 mPas, meist bevorzugt < 300 mPas ist, und/oder
- die selbstvernetzend ist.

14. Formteil, umfassend ein oder mehrere zumindest teilweise ausgehärtete Bindemittel, sowie Partikel, die zumindest abschnittsweise eine hydrophobe Oberflächenbeschichtung aufweisen und die zumindest teilweise in das Bindemittel eingebettet sind, **dadurch gekennzeichnet, dass**
die Partikel Trägerpartikel umfassen, die zumindest abschnittsweise mit einer Beschichtungszusammensetzung auf Basis von Monomeren des Typs A oberflächenbeschichtet sind, wobei die Monomeren des Typs A eine Substanz der Struktur 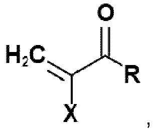
umfassen, wobei
R ausgewählt ist aus einer Gruppe, die OR¹, NR¹, NR¹R² und CN umfasst.

15. Formteil nach Anspruch 14,
**dadurch gekennzeichnet, dass**
ein Brechungsindex n der hydrophoben Oberflächenbeschichtung bei der Wellenlänge 589 nm um höchstens 0,1, bevorzugt 0,08, weiter bevorzugt 0,05, meist bevorzugt 0,03 von dem Brechungsindex n des einen Bindemittels oder den mehreren zumindest teilweise ausgehärteten Bindemitteln abweicht.
